Europäisches Patentamt

European Patent Office

Office européen des brevets

(19)

(11) Numéro de publication: **0 207 862**

**A1**

(12) **DEMANDE DE BREVET EUROPEEN**

(21) Numéro de dépôt: 86401443.6

(22) Date de dépôt: 30.06.86

(51) Int. Cl.⁴: **F 16 B 25/00**

(30) Priorité: 05.07.85 FR 8510331

(43) Date de publication de la demande:
07.01.87 Bulletin 87/2

(84) Etats contractants désignés:
AT BE CH DE GB IT LI LU NL SE

(71) Demandeur: LAURENT INDUSTRIE S.A. Société dite:

F-70290 Plancher-les-Mines(FR)

(72) Inventeur: Legrand, Denis
12 rue des Martenots Plancher les Mines
F-70290 Champagney(FR)

(74) Mandataire: Bonnetat, Christian et al,
Cabinet PROPI Conseils 23 rue de Léningrad
F-75008 Paris(FR)

(54) Tige filetée, telle qu'une vis, et son procédé de fabrication.

(57) La présente invention concerne une tige filetée, telle qu'une vis (1), dont le noyau (2) présente un diamètre au moins sensiblement constant et le filet (3) un pas au moins sensiblement constant sur au moins une partie de la longueur de la tige, les spires du filet demeurant non jointives sur toute la longueur de la partie filetée de la tige.

Selon l'invention, la section transversale (4) du filet (3) croît depuis le voisinage de l'extrémité aval (5) de la tige (1) jusqu'au voisinage de son extrémité amont (6).

L'invention s'applique à des tiges filetées.

*Fig.1*

EP 0 207 862 A1

Tige filetée, telle qu'une vis, et son procédé de fabrication.

La présente invention concerne une tige filetée, telle que, par exemple, une vis, ainsi que son procédé de fabrication.

Les tiges filetées, et en particulier les vis de types conventionnels, présentent l'inconvénient que le vissage nécessite souvent une opération de perçage préalable d'un trou, opération nécesaire pour éviter les risques de casse de la vis. De manière alternative, c'est-à-dire dans le cas où le perçage préalable d'un trou n'est pas réalisé, la consommation d'énergie nécessaire au vissage est relativement importante.

La présente invention a pour but d'éviter ces inconvénients en procurant une tige filetée, telle qu'une vis, dont le noyau présente un diamètre au moins sensiblement constant et le filet un pas au moins sensiblement constant sur au moins une partie de la longueur de la tige, les spires du filet demeurant non jointives sur toute la longueur de la partie filetée de la tige, et qui est notamment remarquable, selon l'invention, en ce que la section transversale du filet croît depuis le voisinage de l'extrémité aval de la tige jusqu'au voisinage de son extrémité amont.

En particulier, la profondeur du filet restant constante, sa base croît depuis le voisinage de l'extrémité aval de la tige jusqu'au voisinage de son extrémité amont.

Selon une autre caractéristique importante de l'invention, dans la zone centrale de la tige, la forme de la section transversale du filet correspond à l'addition d'un triangle dont l'angle au sommet est au moins sensiblement égal à l'angle au sommet de la section transversale du filet au voisinage de l'extrémité aval de la tige et d'un trapèze dont la petite base est confondue avec la base du triangle précité et dont l'angle formé par les deux côtés non parallèles est au moins sensiblement égal à l'angle au sommet de la section transversale du filet au voisinage de l'extrémité amont de la tige, l'angle au sommet au voisinage de l'extrémité aval étant plus petit que l'angle au sommet au voisinage de l'extrémité amont.

En particulier, d'aval en amont, la hauteur du triangle précité diminue tandis que la hauteur du trapèze précité croît de façon concomitante.

Selon encore une autre caractéristique de l'invention, au voisinage de l'extrémité aval de la tige, l'extrémité supérieure du filet est tronquée.

Ainsi, grâce à l'invention, on peut effectuer un prétaraudage (correspondant à la pénétration de la partie de pointe de la vis) avec un angle de filet faible (c'est-à-dire un volume de pénétration faible), ce qui facilite la pénétration de la vis dans la matière la recevant. De ce fait, on peut diminuer le couple de vissage, ce qui entraîne : une réduction des casses de vis, une réduction de l'usure des embouts de vissage, et une réduction de la consommation d'énergie nécessaire au vissage.

En outre, l'angle de filet croît vers l'extrémité amont de la vis (c'est-à-dire l'extrémité susceptible de coopérer avec un moyen de vissage) de façon à présenter une section résistante plus importante.

La présente invention concerne également un procédé de fabrication d'une tige filetée, telle que notammment une vis, du type consistant à former un noyau de tige présentant un diamètre au moins sensiblement constant et dont le filet a un pas au moins sensiblement constant sur au moins une partie de la longueur de la tige et des spires non jointives sur toute la longueur de la partie filetée de la tige, procédé qui est notamment remarquable en ce que l'on conforme le filet de façon que sa section transversale croisse depuis le voisinage de l'extrémité aval de la tige jusqu'au voisinage de son extrémité amont.

En particulier, en maintenant la profondeur du filet constante, on fait croître sa base depuis le voisinage de l'extrémité aval de la tige jusqu'au voisinage de son extrémité amont.

Selon une autre caractéristique importante du procédé, dans la zone centrale de la tige, on conforme le filet de façon que sa section transversale corresponde à l'addition d'un triangle dont l'angle au sommet est au moins sensiblement égal à l'angle au sommet de la section transversale du filet au voisinage de l'extrémité aval de la tige et d'un trapèze dont la petite base est confondue avec la base du triangle précité et dont l'angle formé par les deux côtés non parallèles est au moins sensiblement égal à l'angle au sommet de la section transversale du filet au voisinage de l'extrémité amont de la tige, l'angle au sommet au voisinage de l'extrémité aval étant plus petit que l'angle au sommet au voisinage de l'extrémité amont.

En particulier, d'aval en amont, on diminue la hauteur du triangle précité et, de façon concomitante, on augmente la hauteur du trapèze précité.

Selon encore une autre caractéristique de l'invention, on tronque l'extrémité supérieure du filet au voisinage de l'extrémité aval de la tige.

L'invention sera mieux comprise, et d'autres détails, caractéristiques et avantages de celle-ci apparaîtront plus clairement à la lumière de la description explicative qui va suivre d'un mode de réalisation actuellement préféré de l'invention, description faite en référence aux dessins schématiques annexés, dans lesquels :

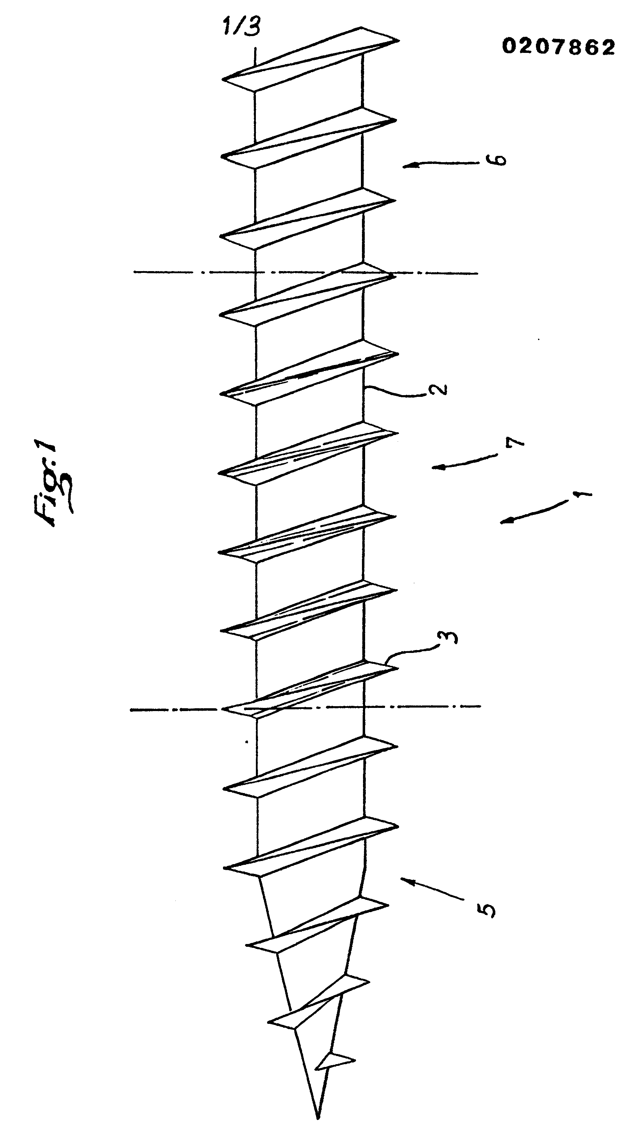

- la figure 1 est une vue générale d'une vis réalisée conformément à la présente invention ;

- les figures 2a,2b,2c sont des vues agrandies, au voisinage de l'extrémité aval, de la zone intermédiaire et au voisinage de l'extrémité amont de la vis de la figure 1, respectivement ;

- la figure 3 représente une section transversale du filet de vis dans la zone intermédiaire de celle-ci ; et

- la figure 4 représente une section transversale d'un autre mode de réalisation du filet de vis au voisinage de l'extrémité aval de celle-ci.

En se référant aux figures, la tige filetée, telle qu'une vis 1, dont le noyau 2 présente un diamètre au moins sensiblement constant et le filet 3 un pas au moins sensiblement constant sur au moins une partie de la longueur de la tige 1, les spires du filet 3 demeurant non jointives sur toute la longueur de la partie filetée de la tige 1, est remarquable, selon l'invention, en ce que la section transversale 4 du filet 3 croît depuis le voisinage de l'extrémité aval 5 de la tige 1 jusqu'au voisinage de son extrémité amont 6.

On doit noter que, par extrémité aval de la tige, on entend, pour une vis, sa pointe ou sa partie d'attaque, tandis que l'extrémité amont correspond à l'extrémité de la vis susceptible de coopérer avec un moyen de vissage ou partie de tête.

En particulier, selon une possibilité de réalisation de l'invention, la profondeur du filet restant constante, sa base croît depuis le voisinage de l'extrémité aval 5 de la tige 1 jusqu'au voisinage de son extrémité amont 6. Cela peut être obtenu, par exemple, par variation de l'angle au sommet de la section transversale du filet.

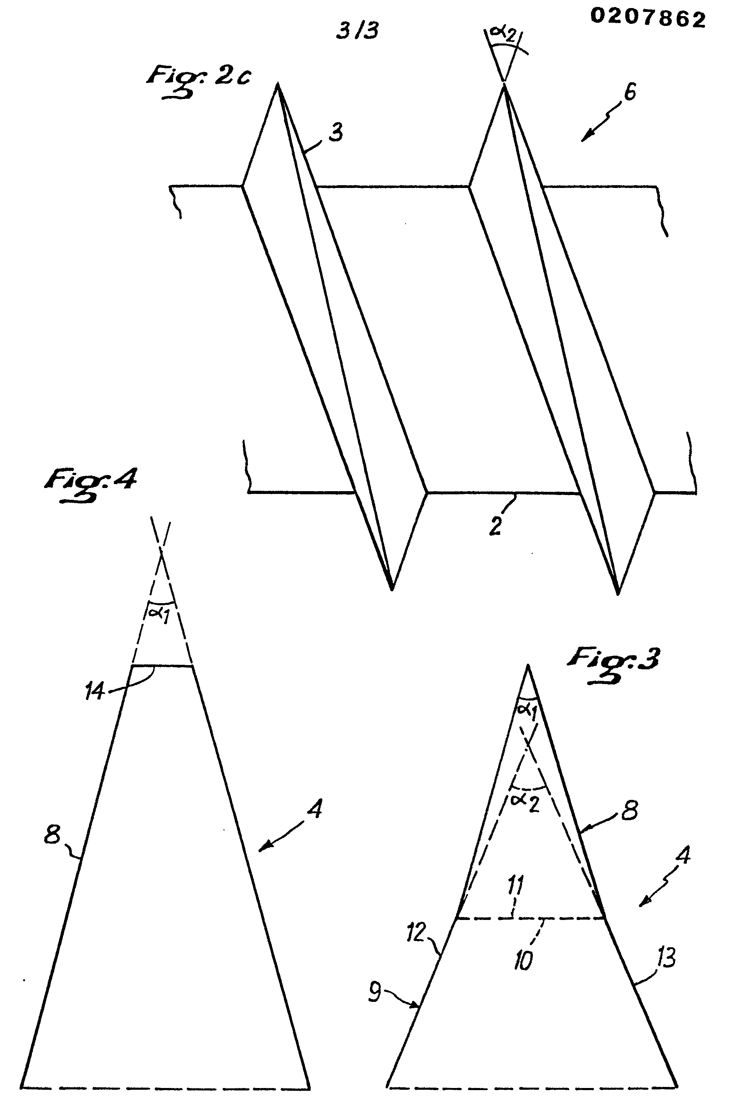

En se référant maintenant en particulier à la figure 3, et selon un mode particulier de réalisation de l'invention, dans la zone centrale 7 de la tige 1, la forme de la section transversale 4 du filet correspond à l'addition d'un triangle 8 dont l'angle au sommet α1 est au moins sensiblement égal à l'angle au sommet α1 de la section transversale du filet au voisinage de l'extrémité aval 5 de la tige et d'un trapèze 9 dont la petite base 10 est confondue avec la base 11 du triangle 8 précité et dont l'angle α2 formé par les deux côtés 12,13 non parallèles du trapèze 9 est au moins sensiblement égal à l'angle au sommet α2 de la section transversale du filet au voisinage de l'extrémité amont 6 de la tige 1, l'angle au sommet α1 étant plus petit que l'angle au sommet α2.

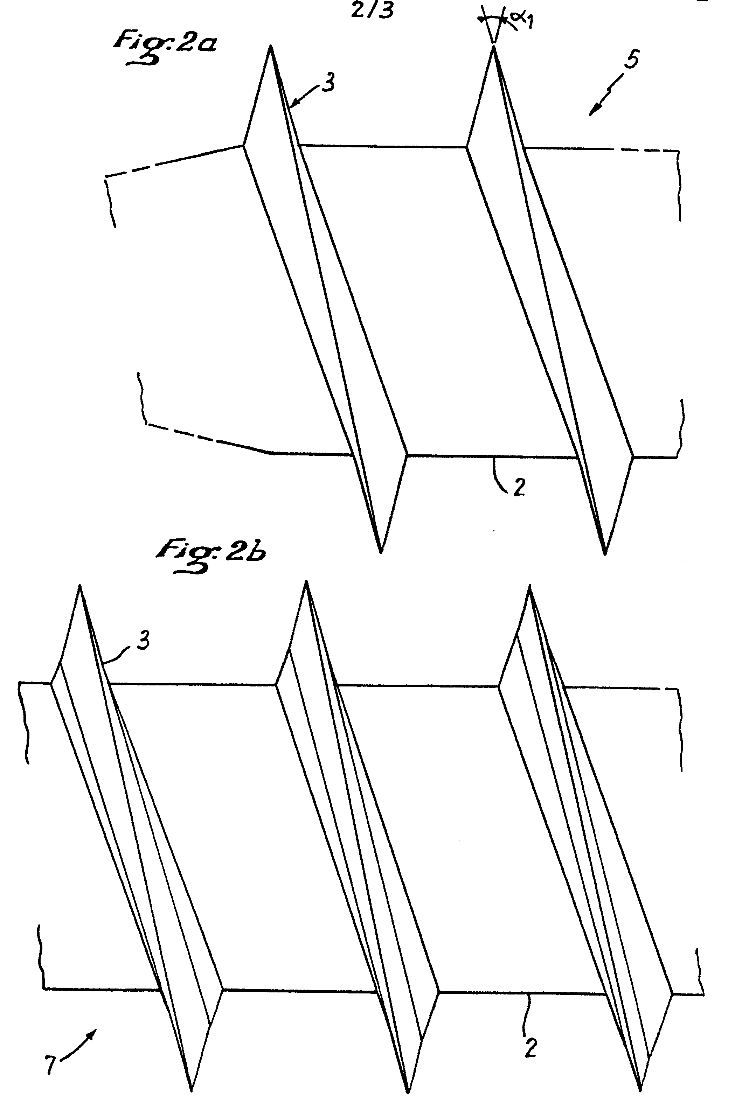

En se référant en particulier à la figure 2b, d'aval en amont, la hauteur du triangle 8 diminue tandis que la hauteur du trapèze 9 croît de façon concomitante ; la profondeur totale du filet demeurant constante. Ainsi, dans la zone intermédiaire 7 de la vis 1, le volume de pénétration de la vis croît de façon régulière, d'aval en amont, de façon à faciliter la pénétration de celle-ci dans la matière la recevant.

On notera de plus que, selon le mode de réalisation illustré de l'invention, dans la zone aval 5 de la vis 1, l'angle au sommet $\alpha 1$ du filet 3 reste constant (figure 2a), tandis que dans la zone amont 6 de la vis 1, l'angle au sommet $\alpha 2$ du filet de vis reste également constant (figure 2c), les sections transversales du filet, dans les zones aval et amont étant au moins sensiblement triangulaires. On passe ainsi, progressivement, dans la zone intermédiaire 7 de la vis 1, du plus petit angle au sommet $\alpha 1$ du filet 3 au plus grand angle au sommet $\alpha 2$ du filet, ce qui implique une variation progressive, dans le sens croissant, d'aval en amont, de la section transversale du filet 3 de la tige 1.

Par exemple, l'angle au sommet $\alpha 1$ du filet d'attaque (filet aval) peut être égal à environ 30°, et l'angle au sommet $\alpha 2$ du filet de tête (filet amont) à environ 40°.

D'autre part, pour des raisons de répartition de matière, il peut être nécessaire de redonner du volume au filet d'attaque ce qui peut être réalisé en tronquant l'extrémité supérieure 14 du filet, et cela dans la zone au voisinage de l'extrémité aval 5 de la tige 1 où la section transversale du filet 3 présente, sensiblement, la forme du triangle 8 d'angle au sommet $\alpha 1$ (figure 4).

On notera enfin que la tige filetée, telle que notamment une vis, selon l'invention, peut être réalisée par tout moyen approprié, en particulier une matrice de forme correspondant, en creux, à celle de la vis.

7

0207862

## REVENDICATIONS

1 - Tige filetée, telle qu'une vis, dont le noyau présente un diamètre au moins sensiblement constant et le filet un pas au moins sensiblement constant sur au moins une partie de la longueur de la tige, les spires du filet demeurant non jointives sur toute la longueur de la partie filetée de la tige, caractérisée en ce que la section transversale (4) du filet (3) croît depuis le voisinage de l'extrémité aval (5) de la tige (1) jusqu'au voisinage de son extrémité amont (6).

2 - Tige filetée selon la revendication 1, caractérisée en ce que la profondeur du filet restant constante, sa base croît depuis le voisinage de l'extrémité aval (5) de la tige (1) jusqu'au voisinage de son extrémité amont (6).

3 - Tige filetée selon la revendication 1 ou 2, caractérisée en ce que, dans la zone centrale (7) de la tige (1), la forme de la section transversale (4) du filet (3) correspond à l'addition d'un triangle (8) dont l'angle au sommet ($\alpha$1) est au moins sensiblement égal à l'angle au sommet ($_\alpha$1) de la section transversale du filet au voisinage de l'extrémité aval (5) de la tige (1) et d'un trapèze (9) dont la petite base (10) est confondue avec la base (11) du triangle (8) précité et dont l'angle ($_\alpha$2) formé par les deux côtés (12,13) non parallèles du trapèze (9) est au moins sensiblement égal à l'angle au sommet ($_\alpha$2) de la section transversale du filet au voisinage de l'extrémité amont (6) de la tige (1) ; l'angle au sommet ($_\alpha$1) étant plus petit que l'angle au sommet ($_\alpha$2).

4 - Tige filetée selon la revendication 3, caractérisée en ce que, d'aval en amont, la hauteur du triangle (8) précité diminue tandis que la hauteur du trapèze (9) précité croît de façon concomitante.

5 - Tige filetée selon l'une quelconque des revendications précédentes, caractérisée en ce qu'au voisinage de l'extrémité aval (5) de la tige (1), l'extrémité supérieure (14) du filet est tronquée.

6 - Procédé de fabrication d'une tige filetée, telle que notamment une vis, du type consistant à former un noyau de tige présentant un diamètre au moins sensiblement constant et dont le filet a un pas au moins sensiblement constant sur au moins une partie de la longueur de la tige et des spires non jointives sur toute la longueur de la partie filetée de la tige, caractérisé en ce que l'on conforme le filet (3) de façon que sa section transversale (4) croisse depuis le voisinage de l'extrémité aval (5) de la tige (1) jusqu'au voisinage de son extrémité amont (6).

7 - Procédé selon la revendication 6, caractérisé en ce que, en maintenant la profondeur du filet (3) constante, on fait croître sa base depuis le voisinage de l'extrémité aval (5) de la tige (1) jusqu'au voisinage de son extrémité amont (6).

8 - Procédé selon la revendication 6 ou la revendication 7, caractérisé en ce que dans la zone centrale (7) de la tige (1), on conforme le filet (3) de façon que sa section transversale (4) corresponde à l'addition d'un triangle (8) dont l'angle au sommet ($\alpha$1) est au moins

sensiblement égal à l'angle au sommet ($\alpha$1) de la section transversale du filet au voisinage de l'extrémité aval (5) de la tige et d'un trapèze (9) dont la petite base (10) est confondue avec la base (11) du triangle (8) précité et dont l'angle ($\alpha$2) formé par les deux côtés non parallèles (12,13) est au moins sensiblement égal à l'angle au sommet ($\alpha$2) de la section transversale du filet au voisinage de l'extrémité amont (6) de la tige (1) ; l'angle au sommet ($\alpha$1) étant plus petit que l'angle au sommet ($\alpha$2).

9 - Procédé selon la revendication 8,
caractérisé en ce que, d'aval en amont, on diminue la hauteur du triangle (8) précité et, de façon concomitante, on augmente la hauteur du trapèze (9) précité.

10 - Procédé selon l'une quelconque des revendications 6 à 9,
caractérisé en ce que l'on tronque l'extrémité supérieure (14) du filet au voisinage de l'extrémité aval (5) de la tige (1).

0207862

Fig.1

0207862

Fig. 2a

3

$\alpha_1$

5

2

Fig. 2b

3

7

2

0207862

Fig. 2c

3

6

$\alpha_2$

2

Fig. 4

$\alpha_1$

14

8

4

Fig. 3

$\alpha_1$

$\alpha_2$

8

11

12

10

9

4

13

Office européen
des brevets

**RAPPORT DE RECHERCHE EUROPEENNE**

**0207862**
Numero de la demande

EP 86 40 1443

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int Cl 4) |
|---|---|---|---|
| A | EP-A-0 088 366 (R. BERGNER) <br> * figure 1 * | 3 | F 16 B 25/00 |
| Y,A | EP-A-0 142 037 (KNOCHE) <br><br> * abrégé descriptif * | 1,2,3, 7 | |
| Y | DE-A-1 400 229 (RESEARCH ENGINEERNG & MANUFACTURING) <br> * figure 1 * | 1,2,7 | |
| A | GB-A- 530 280 (STEELE et al.) <br> * figure 1 * | 1,2 | |
| A | US-A-1 451 484 (WOODWARD) <br> * figure 1 * | 3 | |
| A | US-A-2 787 186 (BROGIOTTI) <br> * colonne 1, lignes 36-39 * | 1 | DOMAINES TECHNIQUES RECHERCHES (Int Cl 4) <br><br> F 16 B 25/00 <br> F 16 B 33/02 <br> F 16 B 39/30 |
| A | US-A-3 405 751 (PARR) <br> * figure 2 * | 1,2 | |
| A | DESIGN ENGINEERING, janvier 1985, pages 37-39, , London, GB; "Screw with chamfered thread root improves thread forming in plastics" <br> * page 38, figures 1-3 * | 3 | |

--- -/-

Le présent rapport de recherche a été établi pour toutes les revendications

| Lieu de la recherche | Date d'achèvement de la recherche | Examinateur |
|---|---|---|
| BERLIN | 11-09-1986 | ZAPP E |

# RAPPORT DE RECHERCHE EUROPEENNE

Office européen
des brevets

**0207862**
Numero de la demande

EP 86 40 1443

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | DE-B-1 294 758  (CENTRE DE RECHERCHES DE PONT-A-MOUSSON) * figure 2 * | 5 | |
| A | FR-A- 741 747  (FOUQUET) * figure 3 * | 5 | |

DOMAINES TECHNIQUES RECHERCHES (Int. Cl.4)

Le present rapport de recherche a été établi pour toutes les revendications

| Lieu de la recherche | Date d'achèvement de la recherche | Examinateur |
|---|---|---|
| BERLIN | 11-09-1986 | ZAPP E |